# EUROPÄISCHE PATENTSCHRIFT

(11) **EP 2 415 908 B1**
(45) Veröffentlichungstag und Bekanntmachung des Hinweises auf die Patenterteilung: **24.12.2014**
(21) Anmeldenummer: 11176072.4
(22) Anmeldetag: 01.08.2011
(51) Int. Cl.: C25D 7/04, C25D 15/00, F16L 13/14, C23C 4/06, C25D 7/10, F16D 1/027

(54) **Verbindungsanordnung und Verfahren zur Herstellung eines hülsenförmig ausgebildeten Verbindungselements**
Connection assembly and method for producing a connection element in the form of a casing
Agencement de liaison et procédé de fabrication d'un élément de liaison formé comme un tube

(30) Priorität: 05.08.2010 DE 102010038947
(43) Veröffentlichungstag der Anmeldung: 08.02.2012
(73) Patentinhaber: Aktiebolaget SKF, 41 550 Göteborg (SE)
(72) Erfinder: Gläntz, Wolfgang, 97422 Schweinfurt (DE); Liesegang, Hans-Jürgen, 26419 Schortens (DE); Horling, Peter, 97453 Schonungen-Mainberg (DE)
(74) Vertreter: Schonecke, Mitja

(56) Entgegenhaltungen:
- EP-A1- 0 373 100
- EP-A1- 0 442 017
- WO-A1-95/21994
- GB-A- 856 610
- GB-A- 2 039 654
- JP-A- 1 068 496

## Beschreibung

Die Erfindung betrifft eine Verbindungsanordnung, die ein erstes wellenförmiges Bauteil mit einem zweiten wellenförmigen Bauteil verbindet, wobei sich die Stirnseite des ersten wellenförmigen Bauteils und die Stirnseite des zweiten wellenförmigen Bauteils gegenüberliegen oder aneinander liegen, wobei beide Bauteile in ihrem axialen Endbereich von einem hülsenförmig ausgebildeten Verbindungselement radial eingefasst sind und wobei das hülsenförmig ausgebildete Verbindungselement an seiner radial nach innen gerichteten, zylindrischen Oberfläche zumindest teilweise mit einer reibungserhöhenden Beschichtung versehen ist. Des weiteren betrifft die Erfindung ein Verfahren zur Herstellung eines hülsenförmig ausgebildeten Verbindungselements.

In verschiedenen technischen Anwendungsfällen ist es erforderlich, zwei Wellen (Vollwellen) oder Rohre (Hohlwellen) miteinander zu verbinden, wobei die Wellen oder Rohre stirnseitig aneinander angesetzt werden. Dabei ist es eine zentrale Forderung, dass die Verbindung der Wellen bzw. Rohre (im Zusammenhang mit der vorliegenden Erfindung wird generell von wellenförmigen Bauteilen gesprochen) fest ist.

Die EP 0 373 100 A1 offenbart eine gattungsgemäße Verbindungsanordnung, bei der eine reibungserhöhende Schicht in Form eines klebstoffgebunden Quarzes aufgebracht ist. Ähnliche und weitere Lösungen zeigen die GB 2 039 645 A**,** die GB 856 610 A**,** die JP 01 068 496 A**,** die WO 95/21994 A1 und die EP 0 442 017 A1.

Der Erfindung liegt die **Aufgabe** zu Grunde, eine Verbindungsanordnung der genannten Art so fortzubilden, dass mit einfachen Mitteln ein fester Verbund der miteinander zu verbindenden wellenförmigen Bauteilen möglich ist.

Die **Lösung** dieser Aufgabe durch die Erfindung sieht bei einer Verbindungsanordnung der oben genannten Art vor, dass die reibungserhöhende Beschichtung Hartstoffpartikel aufweist, die durch eine elektrolytisch abgeschiedene Metallschicht an der nach innen gerichteten, zylindrischen Oberfläche des Verbindungselements fixiert sind.

Die beiden wellenförmigen Bauteile weisen dabei bevorzugt den gleichen Außendurchmesser auf.

Die reibungserhöhende Beschichtung ist bevorzugt eine Nickelschicht. Die Hartstoffpartikel sind dabei vorzugsweise Diamant-Partikel, Bornitrid-Partikel, Silizium-Karbid-Partikel oder Korund-Partikel.

Die Dicke der reibungserhöhenden Beschichtung liegt zumeist bei einem Wert von weniger als 0,5 mm. Ein besonders bevorzugter Bereich der Dicke liegt dabei bei einem Wert von weniger als 0,2 mm.

Die Oberflächenrauheit (Rₐ) der reibungserhöhenden Beschichtung weist bevorzugt einen Wert von mindestens 15 µm, besonders bevorzugt einen Wert von mindestens 20 µm, auf. Es sei allerdings darauf hingewiesen, dass die Oberflächenrauheit sehr stark vom Beschichtungsverfahren abhängt und der genannte Wert daher auch stark streuen kann.

Das Verbindungselement ist dabei bevorzugt auf den beiden wellenförmigen Bauteilen durch einen Schrumpfsitz angeordnet. Das radiale Fügen von Bauteilen, die einen festen Sitz oder eine Übergangspassung haben, kann nur in einem gewissen Toleranzbereich erfolgen. Daher ist unter Schrumpfsitz hier ein angepasster Schrumpfsitz zu verstehen.

Das Verfahren zur Herstellung eines hülsenförmig ausgebildeten Verbindungselements, das an seiner radial nach innen gerichteten, zylindrischen Oberfläche mit einer reibungserhöhenden Beschichtung versehen wird, zeichnet sich gemäß der Erfindung durch die Schritte aus:
a) beidseitiges Abschließen der Stirnseiten des Verbindungselements mit Deckelelementen, so dass ein flüssigkeitsdichter Raum entsteht;
b) Einbringen mindestens einer Anode und Einfüllen eines Elektrolyts in den Raum, wobei in dem Elektrolyt vorzugsweise Hartstoffpartikel enthalten sind;
c) Anlegen einer Gleichspannung zwischen das Verbindungselement und die mindestens eine Anode, bis sich eine Schicht gewünschter Dicke bestehend aus dem Material der Anode galvanisch an die radial nach innen gerichtete, zylindrische Oberfläche angelegt hat.

Um eine gleichmäßige reibungserhöhende Beschichtung zu erreichen, sieht eine Fortbildung vor, dass der Raum nur teilweise mit Elektrolyt gefüllt wird und während Schritt c) das Verbindungselement gedreht wird.

Gemäß der Erfindung wird also das Verbindungselement an seiner radial nach innen weisenden Sitzfläche auf den beiden wellenförmigen Bauteilen mit einer reibungserhöhenden Beschichtung versehen. Durch diese Beschichtung wird ein besonders fester Halt des Verbindungselements auf dem wellenförmigen Bauteil erzielt.

Als Montagemöglichkeit des Verbindungselements auf die wellenförmigen Bauteile hat sich in besonderer Weise ein thermisches Aufschrumpfen bewährt. Dabei kann das im Durchmesser größere Bauteil (d. h. das Verbindungselement) erwärmt und aufgesetzt werden; alternativ oder additiv kann das im Durchmesser kleinere Bauteil (d. h. die wellenförmigen Bauteile) abgekühlt und dann das Verbindungselement aufgesetzt werden. Nach dem Temperaturausgleich liegt ein fester, unter radialer Spannung stehender Verbund vor.

Das Aufbringen der reibungserhöhenden Beschichtung kann beispielsweise auch durch Aufspritzen mittels eines Spritzroboters erfolgen.

Die vorgeschlagene Ausgestaltung ermöglicht einen festen Sitz des Verbindungselements auf den wellenförmigen Bauteilen, auch bei großen Durchmessern. Durch die reibungserhöhende Beschichtung verhaken sich insbesondere beim Einsatz von Hartstoffpartikeln diese in der Gegenoberfläche, so dass ein Mikroformschluss erreicht wird.

In der Zeichnung ist ein Ausführungsbeispiel der Erfindung dargestellt. Es zeigen:
- Fig. 1: im Radialschnitt eine Verbindungsanordnung, bei der zwei wellenförmige Bauteile mit einem Verbindungselement miteinander verbunden sind,
- Fig. 2: die Einzelheit "Z" gemäß Fig. 1, wobei nur das Verbindungselement samt reibungserhöhender Beschichtung dargestellt ist, und
- Fig. 3: ein Verbindungselement, das in einer Vorrichtung aufgenommen ist, mit der auf der radial nach innen gerichteten Oberfläche des Verbindungselement eine reibungserhöhende Beschichtung erzeugt wird.

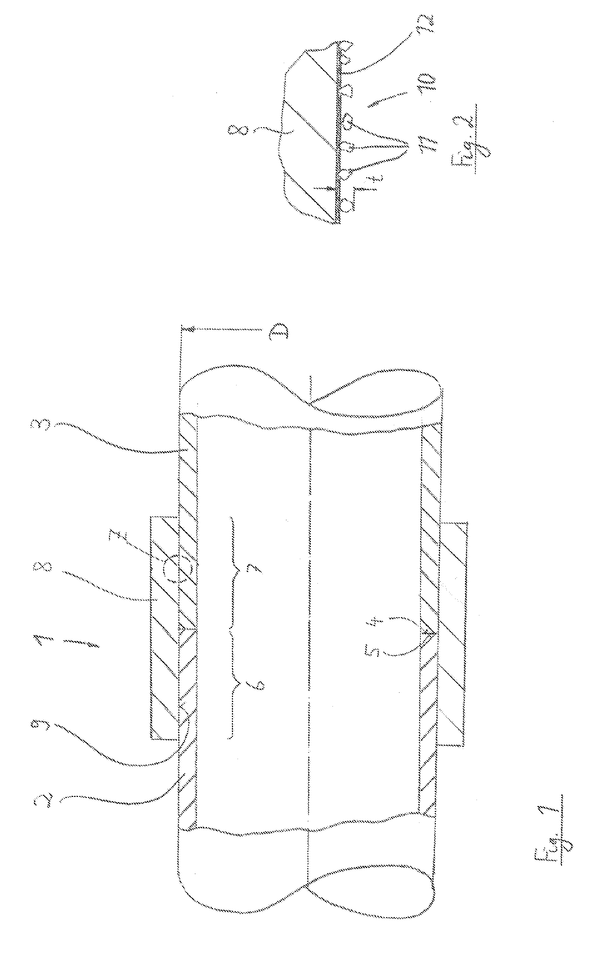

In Fig. 1 ist eine Verbindungsanordnung 1 zu sehen, die zwei wellenförmige Bauteile 2, 3 umfasst, die mit einem Verbindungselement 8 miteinander fest verbunden sind. Das wellenförmige Bauteil 2 hat eine Stirnseite 4 in seinem axialen Endbereich 6, das wellenförmige Bauteil 3 hat eine Stirnseite 5 in seinem axialen Endbereich 7.

Die axialen Endbereiche 6, 7 der wellenförmigen Bauteile 2, 3 werden radial von einem Verbindungselement 8 umgriffen. Das Verbindungselement 8 ist dabei unter Einsatz der Schrumpftechnik mit den beiden wellenförmigen Bauteilen 2, 3 verbunden worden, d. h. nach Erwärmung des Verbindungselements 8 und/oder Abkühlung der wellenförmigen Bauteile 2, 3 wurde die in Fig. 1 skizzierte Stellung der Bauteile gefügt; nach dem Temperaturausgleich liegt ein fester Verbund zwischen dem Verbindungselement 8 und dem jeweiligen Bauteil 2, 3 vor.

Da die beiden wellenförmigen Bauteile 2 und 3 denselben Außendurchmesser D aufweisen, ist das Verbindungselement 8 als Hülse mit konstanter Wanddicke und konstantem Radius ausgeführt. Bei unterschiedlichen Außendurchmessern der Bauteile 2, 3 muss die Geometrie des Verbindungselements 8 entsprechend angepasst werden.

Um ohne aufwändige Maßnahmen eine feste Verbindung zwischen dem Verbindungselement 8 und den jeweiligen Bauteilen 2, 3 sicherzustellen, ist die radial nach innen gerichtete, zylindrische Oberfläche 9 des Verbindungselements 8 mit einer reibungserhöhenden Beschichtung 10 versehen, wie sie in Fig. 2 schematisch illustriert ist.

Hiernach ist eine Beschichtung 10 auf die zylindrische Oberfläche 9 des Verbindungselements 8 - skizziert in Fig. 2 - aufgebracht. Die Beschichtung 10 besteht aus einer elektrolytisch abgeschiedenen Metallschicht 12 (vorliegend aus einer Nickelschicht), die eingesetzt wird, um auf der Oberfläche 9 Hartstoffpartikel 11 zu fixieren. Dabei wird als Hartstoff 11 vorliegend Diamantpulver eingesetzt, das Diamanten mit einer durchschnittlichen Korngröße von ca. 30 bis 100 µm aufweist. Die Dicke t der reibungserhöhenden Beschichtung 10 ist demgemäß gering und liegt bevorzugt im Bereich zwischen 0,05 mm und 0,5 mm, besonders bevorzugt im Bereich von weniger als 0,2 mm.

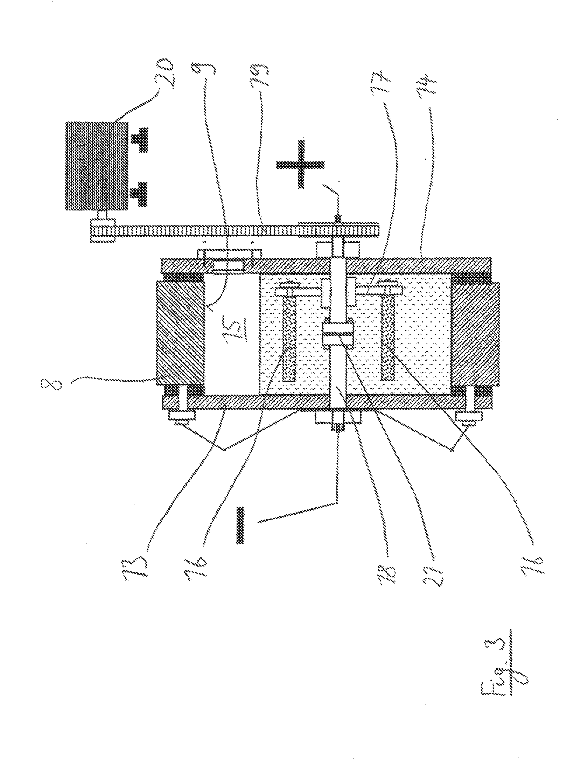

In Fig. 3 ist eine nur schematisch dargestellte Vorrichtung zu sehen, mit der die zylindrische Oberfläche 9 des Verbindungselements 8 mit der reibungserhöhenden Beschichtung 10 versehen werden kann. Hierzu sind stirnseitig an das Verbindungselement 8 zwei Deckelelemente 13 und 14 angebracht, die nach ihrer Montage einen flüssigkeitsdichten Raum 15 abschließen; dieser Raum wird teilweise durch die Oberfläche 9 begrenzt. Der Raum 15 kann auch als Galvanikraum bezeichnet werden.

Der Raum 15 wird dann teilweise mit einem Elektrolyt gefüllt. Weiterhin sind in dem Raum 15 zwei Anoden 16 angeordnet, die von einer entsprechenden Halterung 17 gehalten werden. Die Halterung 17 wird von einer zentrischen Welle 18 durchsetzt, die mittels eines Riemenantriebs 19 von einem Elektromotor 20 angetrieben wird, wodurch auch das Verbindungselement 8 dreht. Die Welle 18 ist axial elektrisch isoliert, d. h. in der Welle 18 ist eine elektrische Isolierung 21 angeordnet. Der eine Teil der Welle 18 (in Fig. 3 der linke Teil) ist elektrisch mit dem Verbindungselement 8 verbunden. Der andere Teil der Welle 18 (in Fig. 3 der rechte Teil) ist elektrisch über die Halterung 17 mit den Anoden 16 verbunden. Eine nicht dargestellte Stromquelle wird nunmehr angeschlossen und zwar so, dass die Anoden 16 mit dem Plus-Pol und das Verbindungselement 8 mit dem Minus-Pol verbunden ist.

Demgemäß fungieren die Anoden 16 als Opferanoden, deren Material sich an der Oberfläche 9 anlagert. In dem Elektrolyt sind Hartstoffpartikel, z. B. Diamantpartikel, enthalten, so dass sich durch die Anlagerung des Materials der Anoden 16 eine Schicht am Verbindungselement 8 anlagert, der - wie in Fig. 2 illustriert - die Hartstoffpartikel fixiert. Das langsame und gleichmäßige Drehen des Verbindungselements 8 während des galvanischen Prozesses durch den Elektromotor 20 schafft eine gleichmäßige Schicht auf der Oberfläche 9. Während sich im vorliegenden Falle das Nickel auf der Oberfläche 9 abscheidet, werden also die im Elektrolyt schwimmenden Diamantpartikeln durch die Drehung immer wieder verwirbelt, was zu einer gleichmäßigen reibungserhöhenden Beschichtung 10 führt.

Die Vorrichtung zur Anlagerung der reibungserhöhenden Beschichtung ist in vorteilhafter Weise sehr kompakt aufgebaut.

### Bezugszeichenliste

- 1: Verbindungsanordnung
- 2: erstes wellenförmiges Bauteil
- 3: zweites wellenförmiges Bauteil
- 4: Stirnseite des ersten wellenförmigen Bauteils
- 5: Stirnseite des zweiten wellenförmigen Bauteils
- 6: axialer Endbereich
- 7: axialer Endbereich
- 8: Verbindungselement
- 9: radial nach innen gerichtete, zylindrische Oberfläche
- 10: reibungserhöhende Beschichtung
- 11: Hartstoffpartikel
- 12: elektrolytisch abgeschiedene Metallschicht
- 13: Deckelelement
- 14: Deckelelement
- 15: flüssigkeitsdichter Raum
- 16: Anode
- 17: Halterung
- 18: Welle
- 19: Riemenantrieb
- 20: Elektromotor
- 21: elektrische Isolierung

- t: Dicke
- D: Außendurchmesser

## Patentansprüche

1. Verbindungsanordnung (1), die ein erstes wellenförmiges Bauteil (2) mit einem zweiten wellenförmigen Bauteil (3) verbindet, wobei sich die Stirnseite (4) des ersten wellenförmigen Bauteils (2) und die Stirnseite (5) des zweiten wellenförmigen Bauteils (3) gegenüberliegen oder aneinander liegen, wobei beide Bauteile (2, 3) in ihrem axialen Endbereich (6, 7) von einem hülsenförmig ausgebildeten Verbindungselement (8) radial eingefasst sind und wobei das hülsenförmig ausgebildete Verbindungselement (8) an seiner radial nach innen gerichteten, zylindrischen Oberfläche (9) zumindest teilweise mit einer reibungserhöhenden Beschichtung (10) versehen ist,
**dadurch gekennzeichnet,**
**dass** die reibungserhöhende Beschichtung (10) Hartstoffpartikel (11) aufweist, die durch eine elektrolytisch abgeschiedene Metallschicht (12) an der nach innen gerichteten, zylindrischen Oberfläche (9) des Verbindungselements (8) fixiert sind.

2. Verbindungsanordnung nach Anspruch 1, **dadurch gekennzeichnet, dass** die beiden wellenförmigen Bauteile (2, 3) den gleichen Außendurchmesser (D) aufweisen.

3. Verbindungsanordnung nach Anspruch 1 oder 2, **dadurch gekennzeichnet, dass** die elektrolytisch abgeschiedene Metallschicht (12) eine Nickelschicht ist.

4. Verbindungsanordnung nach einem der Ansprüche 1 bis 3, **dadurch gekennzeichnet, dass** die Hartstoffpartikel (11) Diamant-Partikel, Bornitrid-Partikel, Silizium-Karbid-Partikel oder Korund-Partikel sind.

5. Verbindungsanordnung nach einem der Ansprüche 1 bis 4, **dadurch gekennzeichnet, dass** die Dicke (t) der reibungserhöhenden Beschichtung (10) weniger als 0,5 mm beträgt, besonders bevorzugt weniger als 0,2 mm.

6. Verbindungsanordnung nach einem der Ansprüche 1 bis 5, **dadurch gekennzeichnet, dass** die Oberflächenrauheit (Rₐ) der reibungserhöhenden Beschichtung (10) einen Wert von mindestens 15 µm, vorzugsweise von mindestens 20 µm, aufweist.

7. Verbindungsanordnung nach einem der Ansprüche 1 bis 6, **dadurch gekennzeichnet, dass** das Verbindungselement (8) auf den beiden wellenförmigen Bauteile (2, 3) durch einen Schrumpfsitz angeordnet ist.

8. Verfahren zur Herstellung eines hülsenförmig ausgebildeten Verbindungselements (8) nach einem der Ansprüche 1 bis 7, das an seiner radial nach innen gerichteten, zylindrischen Oberfläche (9) mit einer reibungserhöhenden Beschichtung (10) versehen wird, mit den Schritten:
a) beidseitiges Abschließen der Stirnseiten des Verbindungselements (8) mit Deckelelementen (13, 14), so dass ein flüssigkeitsdichter Raum (15) entsteht;
b) Einbringen mindestens einer Anode (16) und Einfüllen eines Elektrolyts in den Raum (15), wobei in dem Elektrolyt vorzugsweise Hartstoffpartikel (11) enthalten sind;
c) Anlegen einer Gleichspannung zwischen das Verbindungselement (8) und die mindestens eine Anode (16), bis sich eine Schicht gewünschter Dicke bestehend aus dem Material der Anode (16) galvanisch an die radial nach innen gerichtete, zylindrische Oberfläche (9) angelegt hat.

9. Verfahren nach Anspruch 8, **dadurch gekennzeichnet, dass** der Raum (15) nur teilweise mit Elektrolyt gefüllt wird und während Schritt c) von Anspruch 8 das Verbindungselement (8) gedreht wird.

## Claims

1. Connection assembly (1), which connects a first shaft-like component (2) to a second shaft-like component (3), wherein the end face (4) of the first shaft-like component (2) and the end face (5) of the second shaft-like component (3) lie opposite one another or lie against one another, wherein the two components (2, 3) are radially bordered in the axial end region (6, 7) thereof by a connection element (8) of sleeve-like form, and wherein at least parts of the radially inwardly oriented cylindrical surface (9) of the connection element (8) of sleeve-like form are provided with a friction-increasing coating (10),
**characterized**
**in that** the friction-increasing coating (10) comprises hard material particles (11), which are fixed by an electrolytically deposited metal layer (12) on the inwardly oriented cylindrical surface (9) of the connection element (8).

2. Connection assembly according to Claim 1, **characterized in that** the two shaft-like components (2, 3) have the same external diameter (D).

3. Connection assembly according to Claim 1 or 2, **characterized in that** the electrolytically deposited metal layer (12) is a nickel layer.

4. Connection assembly according to one of Claims 1 to 3, **characterized in that** the hard material particles (11) are diamond particles, boron nitride particles, silicon carbide particles or corundum particles.

5. Connection assembly according to one of Claims 1 to 4, **characterized in that** the thickness (t) of the friction-increasing coating (10) is less than 0.5 mm, particularly preferably less than 0.2 mm.

6. Connection assembly according to one of Claims 1 to 5, **characterized in that** the surface roughness (Rₐ) of the friction-increasing coating (10) has a value of at least 15 µm, preferably of at least 20 µm.

7. Connection assembly according to one of Claims 1 to 6, **characterized in that** the connection element (8) is arranged on the two shaft-like components (2, 3) by a shrink fit.

8. Method for producing a connection element (8) of sleeve-like form according to one of Claims 1 to 7, the radially inwardly oriented cylindrical surface (9) of which is provided with a friction-increasing coating (10), said method comprising the following steps:
a) closing off the end faces of the connection element (8) on two sides with cover elements (13, 14), such that a liquid-tight space (15) is formed;
b) introducing at least one anode (16) and filling an electrolyte into the space (15), hard material particles (11) preferably being present in the electrolyte;
c) applying a DC voltage between the connection element (8) and the at least one anode (16) until a layer of desired thickness consisting of the material of the anode (16) has been deposited galvanically on the radially inwardly oriented cylindrical surface (9).

9. Method according to Claim 8, **characterized in that** the space (15) is filled only partially with electrolyte and the connection element (8) is turned during step c) of Claim 8.

## Revendications

1. Ensemble de liaison (1) qui relie un premier composant (2) de forme ondulée à un deuxième composant (3) de forme ondulée, le côté frontal (4) du premier composant (2) de forme ondulée et le côté frontal (5) du deuxième composant (3) de forme ondulée étant placés l'un en face de l'autre ou reposant l'un contre l'autre, les deux composants (2, 3) étant saisis radialement dans leur partie d'extrémité axiale (6, 7) par un élément de liaison (8) configuré en forme de douille et l'élément de liaison (8) configuré en forme de douille étant doté sur sa surface cylindrique (9) orientée radialement vers l'intérieur au moins en partie d'un revêtement (10) augmentant le frottement, **caractérisé en ce que**
le revêtement (10) renforçant le frottement présente des particules (11) de matière dure fixées sur la surface cylindrique (9), orientée vers l'intérieur, de l'élément de liaison (8) par une couche métallique (12) déposée électrolytiquement.

2. Ensemble de liaison selon la revendication 1, **caractérisé en ce que** les deux composants (2, 3) de forme ondulée présentent le même diamètre extérieur (D).

3. Ensemble de liaison selon les revendications 1 ou 2, **caractérisé en ce que** la couche métallique (12) déposée électrolytiquement est une couche de nickel.

4. Ensemble de liaison selon l'une des revendications 1 à 3, **caractérisé en ce que** les particules (11) de matière dure sont des particules de diamant, des particules de nitrure de bore, des particules de carbure de silicium ou des particules de corindon.

5. Ensemble de liaison selon l'une des revendications 1 à 4, **caractérisé en ce que** l'épaisseur (t) du revêtement (10) augmentant le frottement est inférieure à 0,5 mm et de façon particulièrement préférable inférieure à 0,2 mm.

6. Ensemble de liaison selon l'une des revendications 1 à 5, **caractérisé en ce que** la rugosité de surface (Rₐ) du revêtement (10) augmentant le frottement présente une valeur d'au moins 15 µm et de préférence d'au moins 20 µm.

7. Ensemble de liaison selon l'une des revendications 1 à 6, **caractérisé en ce que** l'élément de liaison (8) est disposé sur les deux composants (2, 3) de forme ondulée par sertissage à retrait.

8. Procédé de fabrication d'un élément de liaison (8) configurée en forme de douille selon l'une des revendications 1 à 7, qui est doté sur sa surface cylindrique (9) orientée radialement vers l'intérieur d'un revêtement (10) augmentant le frottement, le procédé présentant les étapes qui consistent à :
a) refermer des deux côtés les côtés frontaux de l'élément de liaison (8) par des éléments de recouvrement (13, 14) de manière à obtenir un espace (15) étanche aux liquides,
b) placer au moins une anode (16) et un électrolyte dans l'espace (15), l'électrolyte contenant de préférence des particules (11) de matière dure,
c) application d'une tension continue entre l'élément de liaison (8) et la ou les anodes (16) jusqu'à ce qu'une couche d'épaisseur souhaitée, constituée du matériau de l'anode (16), se soit déposée galvaniquement sur la surface cylindrique (9) orientée radialement vers l'intérieur.

9. Procédé selon la revendication 8, **caractérisé en ce que** l'espace (15) n'est rempli qu'en partie d'électrolyte et **en ce que** l'élément de liaison (8) est tourné pendant l'étape c) de la revendication 8.
